# EUROPEAN PATENT APPLICATION

(11) **EP 0 798 528 A2**
(43) Date of publication of application: **01.10.1997**
(21) Application number: 97302197.5
(22) Date of filing: 27.03.1997
(51) Int. Cl.: F28D 9/00

(54) **Heat Exchanger**

(30) Priority: 29.03.1996 US 625483
(71) Applicant: THE BOC GROUP, INC., Murray Hill, New Providence, New Jersey 07974-2082 (US)
(72) Inventor: Sweeney, Paul Alfred, Basking Ridge, New Jersey 07920 (US); Lee, Chien-kuo, Houston, Texas 77057 (US)
(74) Representative: Wickham, Michael

(57) **Abstract**

A heat exchanger for indirectly exchanging heat between first and second fluids. The heat exchanger is provided with a plurality of parallel plates 18 to define first and second heat exchange passages 20 and 22, respectively, for the first fluids to undergo indirect heat transfer. Corrugated fin-type material 25 is positioned within the first and second heat exchange passages 20 and 22 to increase the heat transfer area within the first and second heat exchange passages. Liquid distribution means comprising an array of parallel, vertical plates 28 and 30 defining a set of first channels which each are located vertically above a respective second heat exchange passage 22, and a set of second channels which are each located vertically above a respective first heat exchange passage 20. Liquid gas flows from a manifold into the first channels and over weirs 26 defined by the plates 28 and 30 into the second channels are provided for distributing liquid composed of the second fluid to the second heat exchange passages.. The weirs 26 feed both sides of the second heat exchange passages 22 and the corrugated fin-type material 25 of the second heat exchange passages 22 extends these above to ensure entry of the liquid into each corrugation, and thereby good distribution of the liquid.

## Description

The present invention relates to a heat exchanger for indirectly exchanging heat between first and second fluids.

Falling film evaporators and downflow reboilers are heat exchangers that employ a plurality of heat exchange passages to bring fluids into an indirect heat exchange relationship. Such heat exchanger is employed as a condenser/reboiler of a double column air separation unit to condense gaseous nitrogen against vaporising liquid oxygen.

Typically, in case of air separation applications, inlet and outlet manifolds are provided for introducing and discharging nitrogen into and from one set of heat exchange passages. Liquid oxygen is introduced into another set of heat exchange passages by a liquid distributor. It is important that the liquid be evenly distributed into the heat exchange passages because uneven distribution results in the heat exchanger not meeting its expected performance. Such uneven distribution can also result in dryout and solidification of heavier components in the air. These heavy components can be hydrocarbons such as acetylene which in the presence of oxygen can present a flammability hazard.

The distribution problem becomes particularly pronounced because the heat exchange passages are filled with corrugated material of the type known as corrugated fin-type material. As the density of the corrugated material increases and thus, the number of corrugations increase in number, it becomes very difficult to ensure that all of the corrugations will remain wet with liquid during operation of the heat exchanger.

As will be discussed, the present invention provides a distributor for a heat exchanger of the type mentioned above that acts to promote the wetting of all corrugations of the corrugated fin-type material located within the heat exchange passages that receive the liquid.

According to the present invention there is provided a heat exchanger for indirectly exchanging heat between first and second fluids, said heat exchanger comprising:
a first array of spaced apart, vertical plates defining a plurality of alternating first and second heat exchange passages for said first and second fluids to undergo indirect heat exchange;
corrugated sheet material within said first and second heat exchange passages to increase heat transfer area within said first and second heat exchange passages;
first inlet and outlet means for introducing said first fluid into said first heat exchange passages and for discharging said first fluid from said first heat exchange passages, respectively;
means for distributing liquid into said second heat exchange passages, said liquid distribution means having weirs over which, in use, said liquid flows and falls into said second heat exchange passages, said weirs positioned to feed both sides of each of said second heat exchange passages, and said corrugated sheet material of said second heat exchange passages extending above said second heat exchange passages so as, in use, to receive said liquid in each of the corrugations; and second inlet means for introducing said second fluid, as said liquid, to said weirs.

The extension of the corrugated material above the second heat exchange passages ensures that liquid flows over the weirs into the corrugations of the sheet material to promote wetting of all corrugations.

Heat exchangers according to the invention will now be described by way of example with reference to the accompanying drawings, in which:
Figure 1 is a perspective view of a heat exchanger in accordance with the present invention;
Figure 2 is top plan view of Figure 1;
Figure 3 is a fragmentary perspective view of Figure 1 with portions of the heat exchanger broken away to show a liquid distribution system in accordance with the present invention;
Figure 4 illustrates is a perspective view of an alternative embodiment of the present invention;
Figure 5 is top plan view of Figure 4; and
Figure 6 is a fragmentary perspective view of Figure 4 with portions of the heat exchanger broken away to illustrate a liquid distribution system in accordance with the present invention.

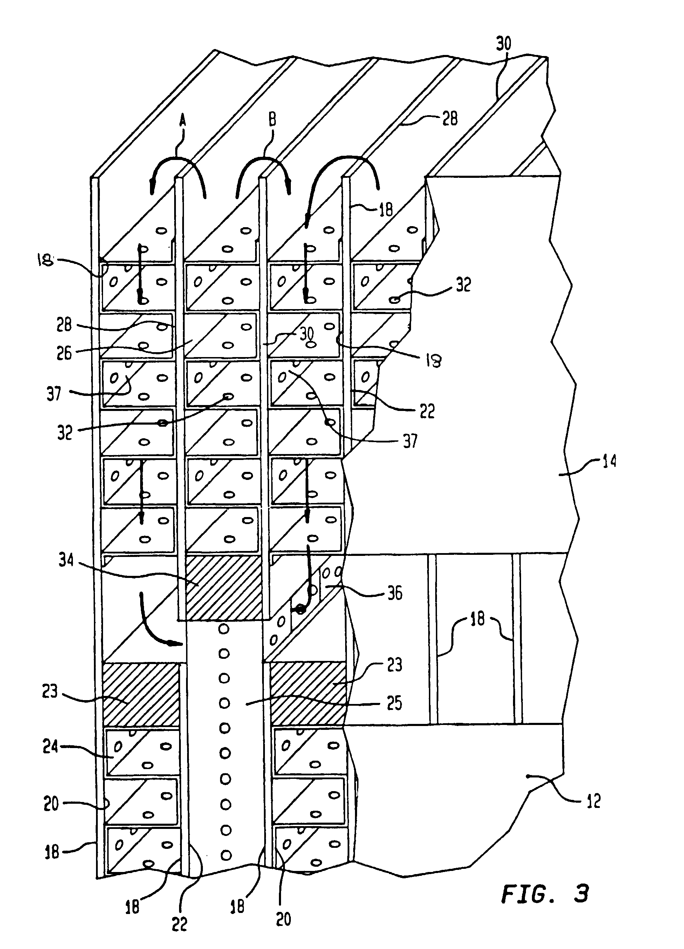

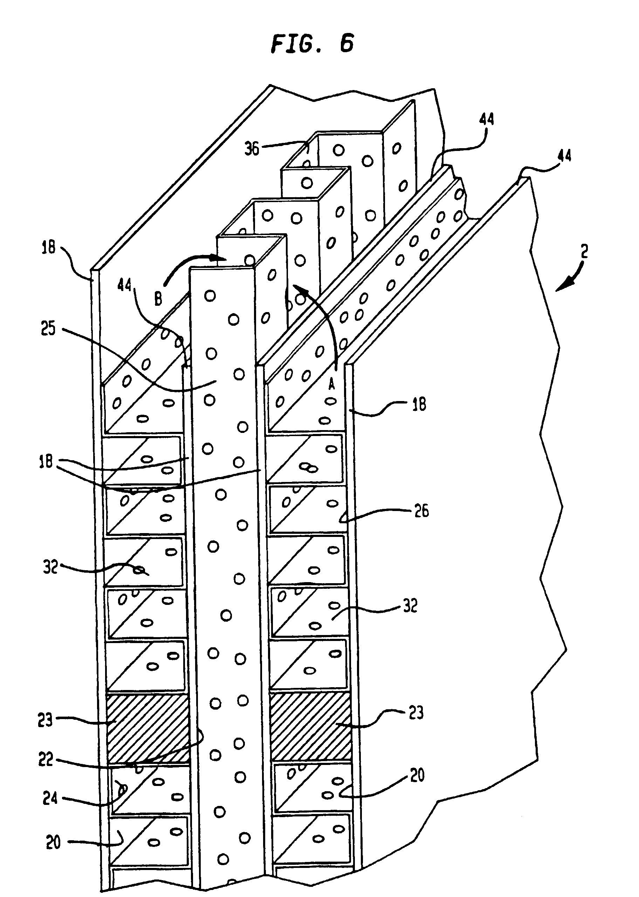

In Figures 3 and 6, the fragmentary views are taken with side bars removed in order to show the heat exchanger internals.

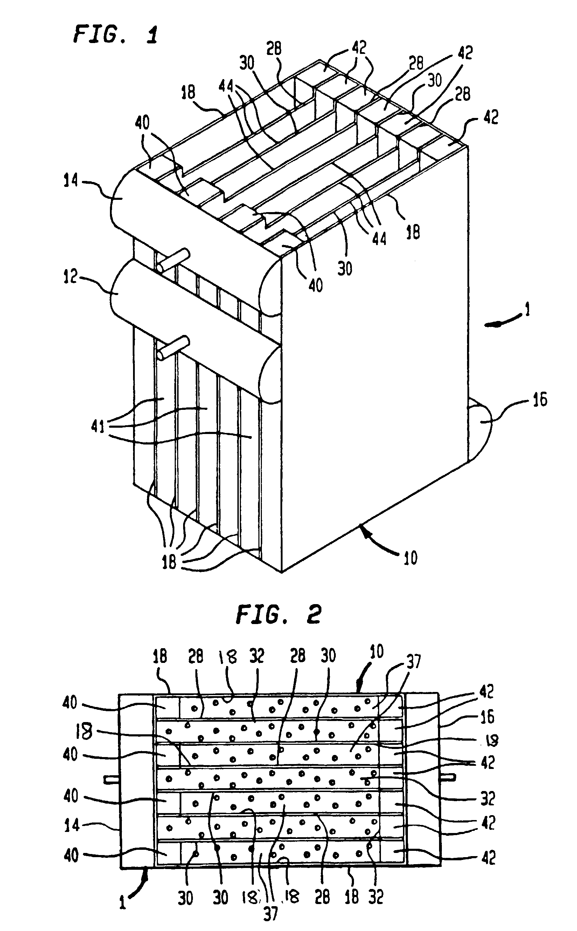

With reference to Figures 1, 2 and 3 of the drawings, a heat exchanger 1 in accordance with the present invention is illustrated. Heat exchanger 1 has inlet manifolds 12 and 14 through which first and second fluids are introduced into a heat exchanger core 10. The first fluid is typically nitrogen vapour to be condensed and second fluid is typically liquid oxygen to be vaporised. The condensed nitrogen is discharged from heat exchanger 1 through an outlet manifold 16.

Core 10 is fabricated to be open at the bottom so that the second fluid (liquid oxygen) not vaporised within heat exchanger 1 simply falls from core 10. Thus, heat exchanger 1 is typically used in connection with a sump, either a separate tank or a sump of a distillation column, for example, the liquid oxygen sump of a lower pressure column of a double column air separation unit.

Core 10 is formed of a first array of spaced apart parallel plates 18 to define first and second heat exchange passages 20 and 22 arranged alternately with one another. First fluid flows through first heat exchange passages 20 and the second fluid flows through heat exchange passages 22 so that heat is indirectly transferred between the first and second fluids.

In a conventional manner, dividing bars 23 seal first heat exchange passages 20 at the top of core 10. Although not illustrated, similar dividing bars seal first heat exchange passages 20 at the bottom of core 10. The first fluid enters first heat exchange passages 20 from the inlet manifold 12 in a horizontal direction and is conducted by corrugated fin-type material 24 with horizontal corrugations. Corrugated fin-type material with inclined corrugations (not illustrated, but in a known manner) causes a transition in the flow from the horizontal to the vertical. Thereafter, the first fluid flows in a vertical direction, down first heat exchange passages 20. Corrugated fin-type material 25 having vertical corrugations is provided in both first and second heat exchange passages 20 and 22 in order to increase the effective area for transferring heat between the first and second fluids.

The second fluid is fed in liquid state from the inlet manifold 14 into a distributor means including a second array of parallel, spaced apart plates 28 and 30 which defines alternate first and second channels. Each first channel is located vertically above a respective second heat exchange passage 22, and each second channel is located vertically above a respective first heat exchange passage 20. Each plate 28 and 30 is aligned with a corresponding heat exchange plate 18 and has a bottom edge located vertically above and spaced from the top edge of the corresponding plate 18 so as to form an elongate gap therebetween. The liquid flows from the inlet manifold first to the first channels. A head or pool of liquid is thus established in each first channel. Liquid flows from the first channels over weirs defined by the parallel plates 28 and 30 into the second channels, as indicated by the arrows A and B. A head or pool of liquid is thus established in each second channel. The weirs 26 are all of the same height. Thus, uniform distribution of the liquid is facilitated. In order further to facilitate uniform distribution of the liquid, the first and second channels are each provided with a sheet 32 and 37, respectively, of corrugated fin-type material, whose corrugations, as shown in Figure 3, run horizontally along the elongate channels. Alternatively, they can run vertically.

Each sheet 25 of corrugated fin type material in the second heat exchange passages 22 extends above the top edges of the plates 18. Corrugations 36 of one such sheet are shown in Figure 3. Liquid flows out of each second channel by virtue of the liquid head through the elongate gaps defined between the bottom edges of the plates 28 and 30 and the corresponding top edges of the plates 18. The liquid is thus fed to both sides of each sheet of corrugated fin type material 25 extending above the top of the plates 18. Uniform distribution of the liquid to the second heat exchange passages 22 is therefore facilitated.

Each first channel is separated at its bottom from a respective second heat exchange passage 22 located vertically thereabove by means of a dividing bar 34 abutting the top edge of the extended section of a respective sheet 25 of corrugated fin material.

In order to prevent liquid, entering through inlet manifold 14, from flowing directly into the first channels from inlet manifold 14, side bars 40 are provided (which have been removed in the fragmentary illustration of Figure 3). Side bars 40 have a gap at the location of horizontally oriented, corrugated fin-type material 24 to allow first fluid to be fed from inlet manifold 12. In this regard, inlet manifold 12 is situated at such gap and, thus, opposite to horizontally oriented, corrugated fin-type material 25. Side bars 41 seal the second heat exchange passages 22. In order to allow liquid to flow into the first channels , the side bars 41 do not extend past dividing bars 34. First and second heat exchange passages 20 and 22 are sealed opposite to side bars 40 and 41 by side bars 42. As can be appreciated, the side bars 42 that are associated with first heat exchange passages 20 are set above outlet manifold 16 so that the second fluid can be discharged from manifold 16. Side bars 42 that are associated with second heat exchange passages 22 run the full height of heat exchanger core 10 because second heat exchange passages 22 are open at the bottom thereof.

The plates 28 and 30 that define second heat exchange passages 22 are provided with rectangular, slot-like cut out sections 44 of a desired depth so as to give a chosen height of liquid head in the second channels.

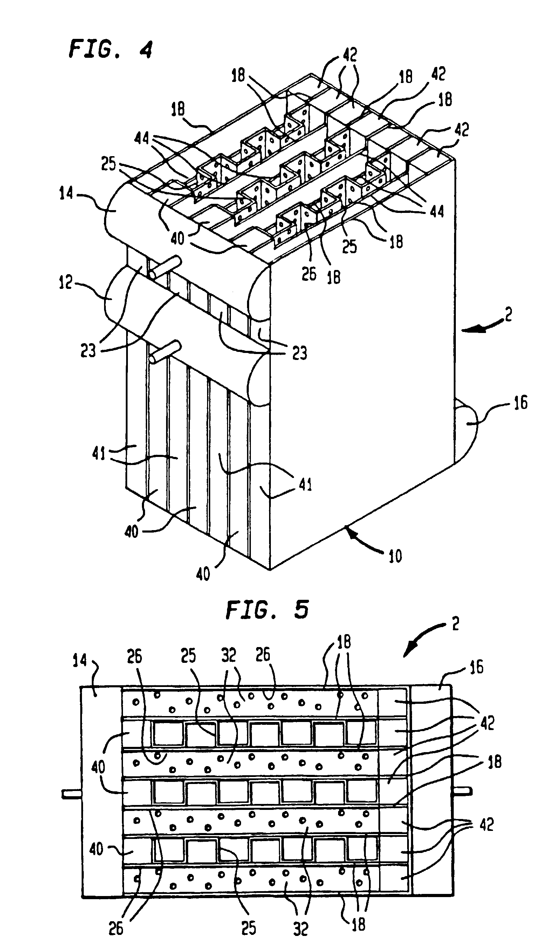

With reference to Figures 4, 5 and 6, an alternative embodiment of a heat exchanger 2 in accordance with the present invention is illustrated. In these illustrations, reference numerals that were used in describing heat exchanger 1 are repeated for components that are the same or repeated in heat exchanger 2.

In heat exchanger 2, as with the embodiment shown in Figures 1-3, corrugated fin material 25 is fabricated to extend beyond second heat exchange passages 22 so that corrugations 36 can all be wetted with the liquid. However, instead of there being separate plates 28 and 30, the plates 18 all extend above said heat exchange passages 20 and 22 and define the weirs 26. The first channels are thus positioned vertically above the first heat exchange passages 20 and are separated therefrom by the dividing bars 23. Each second channel is located vertically above a corresponding second heat exchange passage and there are no dividing bars therebetween. There is thus free flow of liquid from each second channel into a corresponding first channel. Liquid flows over the weirs 26 in the direction of arrowheads A and B into corrugations 36 of corrugated fin material 25. The top of each plate 18 is provided with a rectangular, slot-like cut-out section 44 of chosen depth adjacent corrugated fin material 25 of second heat exchange passages 22.

Referring still to Figures 4 to 6 of the drawings, side bars 40 run the full height of heat exchanger core 10. Side bars 41 extend only up to first inlet manifold 12 to allow the first fluid to enter first heat exchange passages 20 through horizontally oriented, corrugated fin material 24. As such, dividing bars 23 extend so that, at their ends, they separate first and second inlet manifolds 12 and 14. Heat exchanger core 10 is sealed opposite to side bars 40 and 41 by side bars 42. Side bars 42 that are associated with first heat exchange passages 20 are set above outlet manifold 16 so that the second fluid can be discharged from outlet manifold 16. Side bars 42 that are associated with second heat exchange passages 22 run the full height of heat exchanger core 10 as the second heat exchange passages 22 are open at the bottom thereof for the discharge of liquid.

The heat exchanger core 10 in both Figures 1 and 2 can be capped to prevent the escape of vaporised liquid and to more securely weld inlet manifold 14 to heat exchanger core 10. Such a construction is well known in the art.

## Claims

1. A heat exchanger for indirectly exchanging heat between first and second fluids, said heat exchanger comprising:
a first array of spaced apart, vertical plates defining a plurality of alternating first and second heat exchange passages for said first and second fluids to undergo indirect heat exchange;
corrugated sheet material within said first and second heat exchange passages to increase heat transfer area within said first and second heat exchange passages;
first inlet and outlet means for introducing said first fluid into said first heat exchange passages and for discharging said first fluid from said first heat exchange passages, respectively;
means for distributing liquid into said second heat exchange passages, said liquid distribution means having weirs over which, in use, said liquid flows and falls into said second heat exchange passages, said weirs positioned to feed both sides of each of said second heat exchange passages, and said corrugated sheet material of said second heat exchange passages extending above said second heat exchange passages so as, in use, to receive said liquid in each of the corrugations; and second inlet means for introducing said second fluid, as said liquid, to said weirs.

2. A heat exchanger as claimed in claim 1, wherein said distributor means includes a second array of spaced apart vertical plates which define said weirs, each plate in the second array being aligned with a corresponding plate in the first array, and having a bottom edge spaced above the top edge of the corresponding plate so as to define a gap therebetween through which liquid is able to flow and be received by the liquid receiving portions of an associated sheet of said corrugated material.

3. A heat exchanger as claimed in claim 1, wherein said plates continue above said heat exchange passages and form said weirs.

4. A heat exchanger as claimed in claim 2, wherein said second array of spaced, vertical plates provides alternate first and second channels, each first channel being located above a corresponding second heat exchange passage, and said second inlet means communicates with said first channels, whereby, in use, liquid flows from the first channels over the weirs into the second channels.

5. A heat exchanger as claimed in claim 3, wherein said plates form alternate first and second channels, each second channel being located above and contiguous to a corresponding second heat exchange passage, and said second inlet means communicates with said first channels, whereby, in use, liquid flows from the first channels over the weirs into the second channels.

6. A heat exchanger as claimed in claim 4 or claim 5, wherein the second channels are arranged so as, in use, to contain a head of liquid under which liquid flows onto the liquid receiving portions of said corrugated sheet material.

7. A heat exchanger as claimed in any one of claims 4 to 6, in which each said first and second channel contains a corrugated sheet member disposed such that its corrugations run horizontally.
